# EUROPÄISCHE PATENTANMELDUNG

(11) **EP 1 489 241 A1**
(43) Veröffentlichungstag der Anmeldung: **22.12.2004**
(21) Anmeldenummer: 03013914.1
(22) Anmeldetag: 20.06.2003
(51) Int. Cl.: E04B 9/24, E04B 9/06, E04F 13/08, F24F 5/00, F24D 3/16

(54) **Anordnung zum Befestigen von Deckenelementen**

(71) Anmelder: Schneider Dämmtechnik AG, 8405 Winterthur (CH)
(72) Erfinder: Ganz, Jochen, 8610 Uster (CH)
(74) Vertreter: Troesch Scheidegger Werner AG

(57) **Zusammenfassung**

Eine Vorrichtung zum Anordnen von Wand- und/oder Deckenpaneelen bzw. Elemente, wie Verkleidungselemente, Schall- und/oder Isolationsplatten, Unterdeckenelemente, Elemente von Klimatisierungssystemen, etc. weist Halteprofile bzw. Halteelemente (5) auf, an welchen Magnetelemente (11) zum Halten der Wand- und/oder Deckenelemente bzw. Paneele angeordnet sind. Die Halteprofile (5) können T-, H-, U- oder L-förmig ausgebildet sein und weisen mindestens einen von der Decke beabstandeten, wenigstens nahezu parallel dazu verlaufenden, flächigen Schenkel auf, an dessen Schenkelfläche an der von der Decke abgewandten Oberfläche vorzugsweise streifenartige Magnete (11) zum Halten der Elemente bzw. Paneele angeordnet sind.

## Beschreibung

Die vorliegende Erfindung betrifft eine Vorrichtung zum Befestigen bzw. Anordnen von Deckenelementen bzw. Deckenpaneelen wie Verkleidungselemente, Schall- und/oder Isolationsplatten, Unterdeckenelemente und dergleichen gemäss dem Oberbegriff nach Anspruch 1, sowie Verwendungen der Vorrichtung.

Insbesondere bei Bürobauten, vermehrt aber auch bei Privatliegenschaften, wird versucht bei steigenden Komfortansprüchen gleichzeitig den Energieverbrauch zu senken durch Verwendung von immer mehr künstlicher Intelligenz und durch Integration komplexer Technik im Gebäude selbst. Klimatisierung der Räume oder Schalldämmung spielen dabei eine wichtige Rolle, speziell bei Grossraumbüros, Schulungsräumen, Kantinen, Fabrikationshallen und dergleichen.

Durch Anordnen von entsprechenden Isolationselementen wie insbesondere von entsprechenden Decken- oder Wandelementen bzw. Paneelen wird den gestellten Anforderungen Folge geleistet. Dabei handelt es sich um Schallisolationselemente, Wärmeisolationspaneele, oder gar um Decken- oder Wandklimatisierungselemente wie Kühledecken oder Kühlwandplatten mit integrierten Kühl- bzw. Wärmesystemen.

Ein Problem besteht dabei, dass die Entwicklung in Bezug auf das Anordnen von derartigen Schall- und/oder Wärmeisolationssystemen bzw. Klimatisierungssystemen einem ständigen Fortschritt unterworfen ist, sodass bereits nach einer relativen kurzen Zeit bestehende Systeme durch neuere und effizientere zu ersetzen sind. Auch kann es sein, dass dekorativen bzw. Design bezogenen Aspekten gerecht zu werden ist, was ein weiterer Grund sein kann, dass bestehende Systeme durch neue zu ersetzen sind.

Kurz gesagt kann es erforderlich sein, dass Deckenund/oder Wandabdeckelemente bzw. -systeme wie Schallund/oder Wärmeisolationssysteme bzw. Klimatisierungssysteme anzuordnen sind, welche einerseits rasch und kostengünstig montiert werden können, und andererseits gegebenenfalls ebenso rasch einfach und kostengünstig ersetzt werden können.

Erfindungsgemäss wird eine Vorrichtung zum Anordnen von Decken- und/oder Wandelementen bzw. Paneelen gemäss dem Wortlaut nach Anspruch 1 vorgeschlagen.

Vorgeschlagen wird eine Vorrichtung zum Anordnen von Decken- und/oder Wandelementen bzw. Paneelen wie Verkleidungselemente, Schall- und/oder Isolationsplatten, Unterdeckenelemente und dergleichen, welche Halteprofile bzw. Halteelemente aufweist, um an der Decke oder an der Wand befestigt bzw. angeordnet zu werden, welche Profile oder Elemente Blech oder blechartige Befestigungspartien aufweisen an welchen Magnetelemente angeordnet sind zum Halten der Decken- und/oder Wandelemente bzw. Paneele.

Bei den Magnetelementen handelt es sich um Permanentmagnete, an welchen die Decken- und/oder Wandelemente gehalten werden. Bevorzugt sind die Profile, die T-, H-, U- und L-förmig ausgebildet sind und mindestens einen, wenigstens nahezu senkrecht zur Decke verlaufenden, flächigen Schenkel und/oder einen von der Decke beabstandeten, wenigstens nahezu parallel dazu verlaufenden, flächigen Schenkel aufweisen. Dabei können die Magnetelemente entweder mindestens auf einer Seite der senkrecht zur Decke verlaufenden Schenkelflächen, und/oder an der Schenkelfläche der parallel zur Decke verlaufenden Flächen an der von der Decke abgewandten Oberfläche der Schenkelflächen angeordnet sein.

Dabei können die Metallelemente, welche beispielsweise streifenartig ausgebildet sind, auf den Oberflächen der Schenkelflächen angeordnet sein, oder in Aufnahmenuten eingelassen sein, welche für die Aufnahme der Magnetstreifen vorgesehen sind.

Die Schenkelflächen der Profile, insbesondere diejenigen an welchen die Magnetelemente wie Magnetstreifen angeordnet sind, sind vorzugsweise presstechnisch bearbeitet zur Erhöhung der Festigkeit der Schenkelflächen bzw. zur Erhöhung der Wandstärke der Schenkelflächen.

Gemäss einer weiteren Ausführungsvariante der erfindungsgemässen Vorrichtung, ist am Profil oder an den Profilen mindestens ein Halte- bzw. Befestigungsorgan vorgesehen zum Halten bzw. Anordnen von Rohrleitungen für das Führen von Kühl- oder Heizmedien. Zusätzlich ist es möglich am Profil weitere Führungs- und/oder Befestigungsorgane vorzusehen für das Führen elektrischer Leitungen, für das Halten von Rohrleitungen für hydraulische Medien, für das Führen von Kabelsträngen zur Übertragung autovisueller Daten und/oder Fernmeldedaten, für das Halten von Lüftungsrohren, etc.

Weitere bevorzugte Ausführungsvarianten der erfindungsgemässen Vorrichtung sind in den abhängigen Ansprüchen charakterisiert.

Die erfindungsgemäss vorgeschlagene Vorrichtung eignet sich insbesondere für das Anordnen bzw. Befestigen von Schall- bzw. Akustikelementen, Wärmeisolationselementen, Klimatisierungssystemen, Lüftungselementen wie Lüftungsschächten, für dekorative Decken bzw. Wandplatten, für funktionelle Decken- bzw. Wandpaneele wie Leinwandpaneele, Wandtafeln, beschreibbare Paneele, etc.

Der grosse Vorteil der erfindungsgemässen Vorrichtung liegt darin, dass einerseits Decken- und/oder Wandelemente wie Isolationsplatten, Deckenplatten, flächige Elemente von Klimatisierungssystemen etc. rasch angeordnet bzw. montiert werden können vorausgesetzt, dass diese im Bereich der an den Profilen angeordnete Metallstreifen metallisch ausgebildet sind und vorausgesetzt, dass die Haftkraft der Magnete ausreichend ist, um die Elemente zu halten. Andererseits liegt der Vorteil darin, dass die Systeme rasch ausgewechselt werden können, ohne aufwendige Demontage und Neumontage neu anzuordnender Deckenplatten, Wandpaneelen, Elementen von Klimatisierungssystemen, etc.

Die Erfindung wird nun beispielsweise und unter Bezug auf die beigefügten Figuren näher erläutert.

Dabei zeigen:
- Fig. 1: Halteprofile, schematisch im Schnitt, für das Halten bzw. Befestigen von Deckenelementen;
- Fig. 2: schematisch und im Schnitt ein erfindungsgemässes Profil für das Anordnen von flächigen Deckenelementen;
- Fig. 3: eine weitere Ausführungsvariante eines Profils für das Anordnen von flächigen Deckenelementen;
- Fig. 4: wiederum eine weitere Ausführungsvariante eines Halteprofils für das Anordnen von Isolationsdeckenelementen.

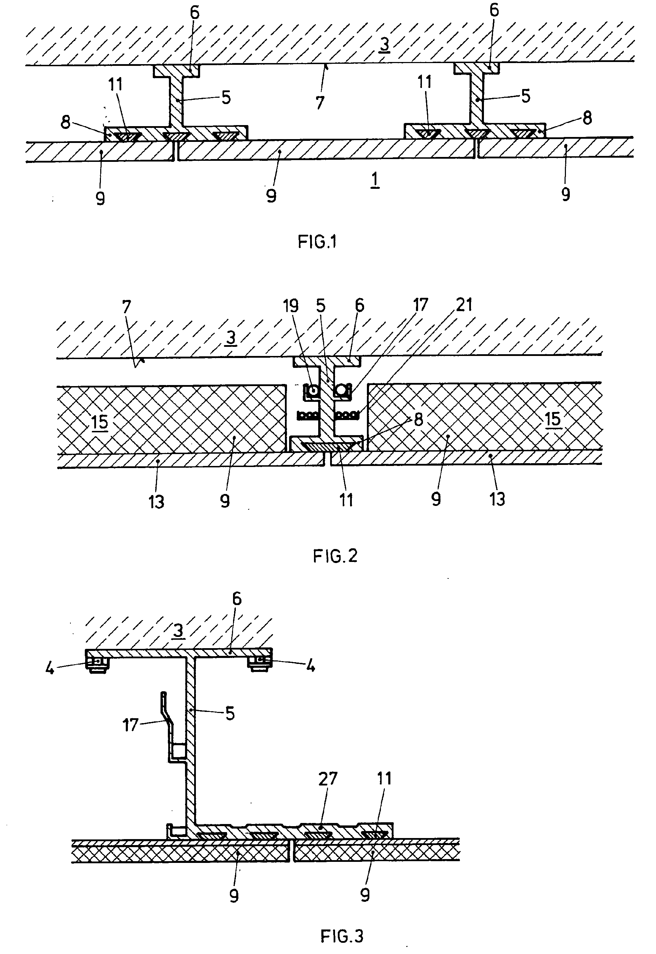

Fig. 1 zeigt schematisch und im Schnitt eine Deckenunterkonstruktion, die erfindungsgemässe Halteprofile für das Anordnen für Deckenelementen bzw. Deckenpaneelen aufweist. An der Deckenunterseite 7 einer Decke, wie beispielsweise einer Betondecke 3, sind Halteprofile 5 angeordnet, welche beispielsweise mit ihrer Basis 6 an der Unterseite der Decke befestigt sind. Dies kann durch kleben, durch Befestigen mittels Schrauben, etc. erfolgen.

Beabstandet von der Unterseite der Decke 7 weisen die Profile 5 eine Befestigungsfläche 8 auf, in welcher eingelassen Magnetstreifen 11 angeordnet sind. An der Befestigungsfläche 8 angebracht, bzw. durch die Magnete 11 gehalten, werden zum Beispiel schalldämmende Akustikelemente 9, um beispielsweise eine Schalldämmung im Raum 1 zu erzeugen. Dies ist insbesondere in Grossraumbüros, Schulungsräumen, Kantinen, und dergleichen notwendig, wo im Falle der Anwesenheit einer grösseren Anzahl Personen ein relativ hoher Lärmpegel herrscht, oder aber bei Räumlichkeiten wie Schulungsräumen, wo eine hohe Schalldämmung notwendig ist.

Da insbesondere im Bereich Schalldämmung, Raumklimatisierung, Wärme- bzw. Kältedämmung laufend Fortschritte erzielt werden, ist es durchaus möglich, dass nach bereits einer relativ kurzen Zeit nach Erstellung eines Gebäudes die Platten 9 zu ersetzen sind und beispielsweise durch, eine höhere Funktionalität aufweisende, neue Platten zu ersetzen sind, in welchen beispielsweise zusätzlich Klimatisierelemente wie Kühlrohre und dergleichen angeordnet sind.

Entsprechend ist in Fig. 2 wiederum ausschnittsweise eine Deckenunterkonstruktion dargestellt, welche erneut ein Profil 5 aufweist, welches über eine Basis 6 an der Unterseite 7 der Decke 3 befestigt ist. Wiederum weist das Profil 5 beabstandet von der Decke eine Befestigungsfläche 8 auf, an welcher an der von der Decke abgewandten Oberfläche erneut ein Magnet wie z.B. ein Permanentmagnet 11 angeordnet ist. In der Ausführung gemäss Fig. 2 erstreckt sich der flächige Magnet 11 über die gesamte Oberfläche des Befestigungsschenkels 8 des Profils 5. Die vom Profil 5 gehaltenen Deckenpaneele 9 weisen einerseits eine metallene Abdeckung 13 auf, welche raumseitlich angeordnet ist und welche beispielsweise pulverlackiert dekorativ ausgestaltet sein kann. An der Rückseite der Abdeckungsbleche 13 ist zum Beispiel schalldämmendes Material 15 angeordnet, wobei es sich um ein geschäumtes Polymer, um ein faserartiges Material, um eine Holzkonstruktion, etc. handeln kann. Andererseits sind am Profil Halteorgane 17 respektive 21 vorgesehen, beispielsweise für das Führen von Lüftungskühl- oder Heizrohren 19, oder für das Führen von elektrischen Leitungen, Lautsprecherkabeln, Fernsehkabeln, Fernmeldekabeln, etc.

In Fig. 3 ist erneut eine weitere Ausführungsvariante eines Profils 5 dargestellt, welches wiederum über eine Basisfläche 6 an der Unterseite einer Decke 3 gehalten ist. Damit auch das Profil selbst rasch montiert, respektive ausgewechselt werden kann, kann es vorteilhaft sein, wenn das Profil beispielsweise über Klemmnuten 4 an Halteorganen befestigt ist, welche an der Unterseite der Decke eingelassen angeordnet sind. Erneut weist das Profil 5 ein Halteorgan 17 auf, vorgesehen für das Halten von Rohrleitungen wie Leitungen für Kühl- oder Wärmemedien, für Hydraulikleitungen, etc. In Abänderung zu den Profilen in den Figuren 1 und 2 weist nun das Profil 5 gemäss Fig. 3 eine Befestigungsfläche bzw. einen Befestigungsschenkel 27 auf, welcher presstechnisch zur Erhöhung der Festigkeit bzw. zur Erhöhung der Bandstärke des Befestigungsschenkels bearbeitet ist. Gleichzeitig können presstechnisch Aufnahmenuten im Befestigungsschenkel 27 erzeugt werden für das Anordnen der Magnetstreifen 11. Schliesslich werden durch die Magnetstreifen 11 erneut Deckenelemente 9 gehalten.

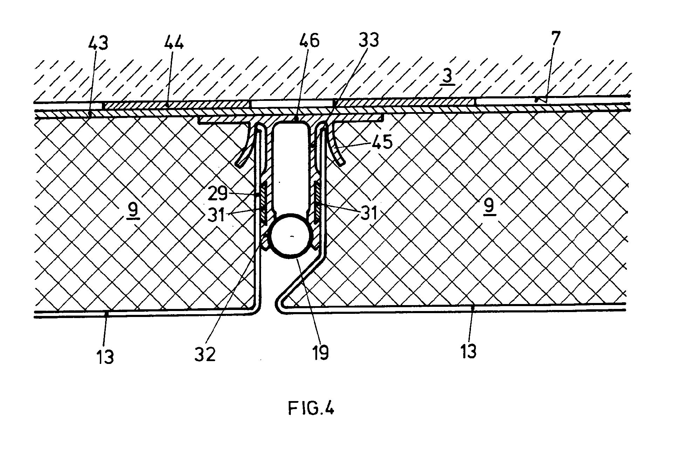

Magnete in den Halteprofilen müssen aber nicht zwingend in Befestigungsflächen angeordnet sein, welche wenigstens nahezu parallel zur Unterseite der Decke, bzw. welche parallel beispielsweise zu einer Raumwandung verlaufen. Vielmehr ist es auch möglich, bzw. gegebenenfalls vorteilhaft, falls Magnetstreifen in Befestigungsschenkeln, bzw. in Befestigungspartien der Profile angeordnet sind, welche wenigstens nahezu senkrecht zur Decke bzw. zu einer Raumwandung verlaufen. Ein derartiges Profil ist schematisch im Schnitt in Fig. 4 dargestellt. In der Konstruktion gemäss Fig. 4 ist an der Unterseite 7 der Decke 3 ein Metallblech 43 angeordnet, wobei die Befestigung beispielsweise mittels eines Klebers erfolgt, schematisch dargestellt durch Klebfugen 44. Selbstverständlich ist es auch möglich die Metallplatte vollflächig mit der Decke 3 zu verbinden. Das Befestigungselement 33 ist erneut mit der Basisfläche 46 an der Metallplatte 43 befestigt, was beispielsweise erneut mittels eines Klebers erfolgen kann, mittels Schweissen, zum Beispiel Leserschweissen, durch Schrauben, etc. Am Profil 33 ist endständig eine Halterung 32 für das Anordnen einer Rohrleitung 19 vorgesehen, wie beispielsweise eine Kühlleitung. Je seitlich in den beiden senkrecht zur Decke 3 verlaufenden Schenkeln des Profils 33 eingelassen sind Magnetstreifen 31, vorgesehen, um die Schall absorbierenden Deckenpaneele 9 zu halten. Dies geschieht mittels der Abdeckbleche 13, welche je seitlich zum Abschliessen der Deckenpaneele 9 zur Bildung aufgebogener Abschlusskanten 29 umgebogen sind, die nun durch die Magnetstreifen 31 gehalten werden. Selbstverständlich ist es möglich zur Erhöhung der Haltekraft das Profil entsprechend durch weitere Elemente wie Führungsenden 45 zu ergänzen.

Auf die Funktionsweise der Deckenkonstruktion, wie ausschnittsweise in Fig. 4 dargestellt, soll an dieser Stelle verzichtet werden, da analoge Deckenelemente aus der europäischen Patentanmeldung EP 1 167 888 bekannt sind, und welche unter der Bezeichnung Akustiktherm von der Anmelderin auf dem Markt angeboten werden. Im vorliegenden Fall ist lediglich interessant bzw. wesentlich, dass die Schall absorbierenden Deckenpaneele mittels Magneten festgehalten werden und somit leicht austauschbar sind.

Im Zusammenhang mit der vorliegenden Erfindung ist es selbstverständlich wesentlich, dass die zur Verfügung stehende Metallfläche ausreicht, damit die Deckenbleche bzw. Deckenelemente, Deckenpaneele, Wandplatten, etc. mit ausreichender Sicherheit gehalten werden können. Mit anderen Worten ist es wesentlich, dass die Magnetkraft ausreichend ist, die sich durch die Anzahl Profile ergibt, wie beschrieben in Bezug auf die Figuren 1-4, durch die Anzahl Magnetstreifenprofile, die Breite der Magnetstreifen, die Länge der Magnetstreifen, die Haftkraft der verwendeten Magnete und selbstverständlich durch die Oberflächenbeschaffenheit der Magnete. Beim Anordnen der Wand- bzw. Deckenelemente ist es wesentlich, dass die Magnetoberflächen möglichst ebenflächig ausgebildet sind d. h., dass sie keine Verunreinigungen aufweisen.

Nebst der Flexibilität beim Anordnen bzw. Auswechseln von Decken- bzw. Wandsystemen liegt ein weiterer grosser Vorteil darin, dass in der Regel ein hoher Wärmeübergang bzw. eine hohe thermische Leitfähigkeit erzielt werden kann, was insbesondere bei Kühlsystemen und dem Anordnen zusätzlicher Kühlleitungen an den Profilen vorteilhaft ist.

In Ergänzung zu den Figuren 1-4 ist es selbstverständlich auch möglich, mehrere Profile durch Bildung grossflächiger Befestigungsanordnungen zu kombinieren, welche beispielsweise an der Unterseite einer Decke befestigt werden können. Dies kann etwa entsprechend der Fig. 4 dadurch erfolgen, indem auf einer Metallplatte bzw. einem Metallblech mehrere Profile parallel nebeneinander angeordnet werden und die so erhaltene grossflächige Anordnung an der Unterseite der Decke befestigt wird.

Bei den in Bezug auf die Figuren 1-4 beschriebenen Profile bzw. Deckenbefestigungssystemen handelt es sich selbstverständlich nur um Beispiele, welche geeignet sind die vorliegende Erfindung näher zu erläutern. Es ist es selbstverständlich möglich derartige Profile auch seitlich an Raumwandungen anzuordnen und zu verwenden für die Befestigung irgendwelcher Decken- und Wandelementen oder Paneelen wie Schallelemente, Wärmeisolationselemente, Elemente von Klimatisierungssystemen, das Anordnen von dekorativen plattenartigen Elementen, für das Anordnen von funktionellen Elementen wie Wandtafeln, LCD-Bildschirmen, Reproduktionstafeln, etc. Wesentlich ist, dass die Befestigung all der genannten Elemente über Magnete erfolgt, welche an Profilen angeordnet sind, die ihrerseits an der Unterseite einer Decke oder seitlich an einer Raumwandung angeordnet sind.

## Patentansprüche

1. Vorrichtung zum Anordnen von Wand- und/oder Deckenelementen bzw. Paneelen wie Verkleidungselemente, Schall- und/oder Isolationsplatten, Unterdeckenelemente, Elemente von Klimatisierungssystemen, etc., **gekennzeichnet durch** Halteprofile (5,33) bzw. Halteelemente, an welchen Magnetelemente (11,31) zum Halten der Wand- und/oder Deckenelemente bzw. Paneele (9,13) angeordnet sind.

2. Vorrichtung nach Anspruch 1, **dadurch gekennzeichnet, dass** Permanentmagnete vorgesehen sind.

3. Vorrichtung nach einer der Ansprüche 1 oder 2, **dadurch gekennzeichnet, dass** die Profile (5,33) T-, H-, U-, oder L-förmig ausgebildet sind, die mindestens einen von der Decke beabstandeten, wenigstens nahezu parallel dazu verlaufenden flächigen Schenkel aufweisen, an wessen Schenkelfläche an der von der Decke abgewandten Oberfläche vorzugsweise streifenartige Magnete (11) zum Halten der Elemente bzw. Paneele angeordnet sind.

4. Vorrichtung nach einer der Ansprüche 1 oder 2, **dadurch gekennzeichnet, dass** die Profile T-, H-, U-, oder L-förmig ausgebildet sind, mindestens einen wenigstens nahezu senkrecht zur Decke verlaufenden flächenartigen Schenkel (33)aufweisen, wobei auf mindestens einer Seite der Schenkelfläche ein vorzugsweise streifenartiges Magnet angeordnet ist, der zum Halten der Elemente bzw. Paneele vorgesehen ist.

5. Vorrichtung nach einem der Ansprüche 1-4, **dadurch gekennzeichnet, dass** an der Seitenfläche des Schenkels oder im oder an der Oberfläche des Schenkels Aufnahmenuten vorgesehen sind für die Aufnahme der Magnetstreifen.

6. Vorrichtung nach einem der Ansprüche 1-5, **dadurch gekennzeichnet, dass** die Schenkelfläche (27) presstechnisch zur Erhöhung der Wandfestigkeit bzw. zur Erhöhung der Wandstärke bearbeitet ist.

7. Vorrichtung nach einem der Ansprüche 1-6, **dadurch gekennzeichnet, dass** am Profil (5,33) mindestens ein Halteorgan zum Halten bzw. Anordnen von Rohrleitungen (19) für Kühl- oder Heizmedien vorgesehen ist.

8. Vorrichtung nach einem der Ansprüche 1-7, **dadurch gekennzeichnet, dass** am Profil weitere Führungs- und/oder Halteorgane (17,21) für elektrische Leitungen, für Rohrleitungen zum Führen von hydraulischen Medien, für Kabel zur Übertragung audiovisueller Daten und/oder Fernmeldedaten für Lüftungsrohre, etc vorgesehen sind.

9. Anordnung, aufweisend eine oder mehrere Vorrichtungen, nach einem der Ansprüche 1-8 zur Bildung einer Halte- bzw. Befestigungsanordnung, wobei die Profile beispielsweise auf einem Blech oder einer Metallplatte vorzugsweise parallel zueinander verlaufend, voneinander beabstandet angeordnet sind.

10. Verwendung der Vorrichtung nach einem der Ansprüche 1-8 bzw. der Anordnung nach Anspruch 9 für das Anordnen bzw. Befestigen von Schall- bzw. Akustikelementen, Wärmeisolationselementen, Lüftungselementen, Belüftungsschächten, blecherne Elemente bzw. Decken- oder Wandpaneele von Klimatisierungssystemen, zum Halten von dekorativen Decken- bzw. Wandpaneelen, funktionellen Decken- bzw. Wandpaneelen, beschreibbaren Paneelen, Wandtafeln, LCD-Monitoren, etc.
